Europäisches Patentamt

European Patent Office

Office européen des brevets

(11) Veröffentlichungsnummer: **0 509 119 A1**

## (12) EUROPÄISCHE PATENTANMELDUNG

(21) Anmeldenummer: **91106200.8**

(22) Anmeldetag: **18.04.91**

(51) Int. Cl.5: **H02K 1/28**, H02K 17/16, H02K 1/26

(43) Veröffentlichungstag der Anmeldung:
**21.10.92 Patentblatt 92/43**

(84) Benannte Vertragsstaaten:
**AT BE CH DE DK ES FR GB GR IT LI LU NL SE**

(71) Anmelder: **ASEA BROWN BOVERI AG**
**Haselstrasse**
**CH-5401 Baden(CH)**

(72) Erfinder: **Heil, Werner**
**Geisshaldenweg 310**
**CH-5242 Lupfig(CH)**
Erfinder: **Prenner, Herbert**
**Breite 2B**
**CH-5200 Windisch(CH)**

(54) **Rotor einer Asynchronmaschine.**

(57) Bei einem Rotor einer Asynchronmaschine ist der Rotorkörper aus "dicken" Blechscheiben (1) aufgebaut und bildet eine selbsttragende Baueinheit, die mit der Welle (9) verbunden ist. Der Zusammenhalt der Einzelbleche (1) erfolgt entweder durch Bolzen, gegebenenfalls in Kombination mit Verschweissen der Blechscheiben (1) untereinander, oder nur durch Verschweissen untereinander.

Ein derart aufgebauter Rotor wird allen Betriebsbeanspruchungen gerecht, weil keine Spannungsüberhöhungen weder am Wellensitz noch im Bereich der Rotorzähne auftreten.

Fig.9

EP 0 509 119 A1

## TECHNISCHES GEBIET

Die Erfindung bezieht sich auf einen Rotor einer Asynchronmaschine mit einem mehrteiligen Rotorkörper, der in Axialrichtung zusammengehalten und kraft- oder formschlüssig mit einer Welle verbunden ist und bei welchem Leiterstäbe in Durchgangsbohrungen im Rotorkörper liegen, die ausserhalb des Rotorkörpers mit je einem Kurzschlussring elektrisch und mechanisch untereinander verbunden sind.

Die Erfindung nimmt dabei Bezug auf einen Stand der Technik, wie er sich beispielsweise aus dem Buch von Wiedemann/Kellenberger "Konstruktion elektrischer Maschinen", SpringerVerlag Berlin-Heidelberg-New York, 1967, S.269, ergibt.

## TECHNOLOGISCHER HINTERGRUND UND STAND DER TECHNIK

Der Rotorblechkörper in Gleich- und Wechselstrommaschinen hat sich selbst und die Rotorwicklung gegen Fliehkraft zu tragen, den magnetischen Fluss zu leiten und das Drehmoment in der Nutenzone auf die Welle zu übertragen. Die mechanische Beanspruchung bei Schleuderdrehzahl - sowohl der Zähne im Radius des Nutengrundes als auch die tangentiale Zugbeanspruchung im schwächsten Querschnitt - soll die Streckgrenze des Blechs nicht überschreiten.

Einteilige Bleche in mittleren Maschinen werden einzeln oder paketweise auf die Welle oder den Rotorstern aufgesetzt. Die Drehmomentübertragung erfolgt über Keile und/oder über einen Press- bzw. Schrumpfsitz. Der Press-Sitz oder das Schrumpfmass soll so gross sein, dass bei Schleuderdrehzahl und warmem Blechkörper noch kein Abheben von der Welle bzw. dem Rotorstern erfolgt. In diesem Fall ist für die Beanspruchung der Bleche die Schrumpfspannung in der Bohrung bei Stillstand und kaltem Rotor massgebend. Die axiale Pressung des Rotorblechkörpers erfolgt durch vernietete oder verschweisste Pressbolzen gegebenenfalls in Kombination mit Pressringen, oder durch Pressringe, die axial auf der Welle festgelegt sind.

Bei Asynchronmaschinen-Rotoren wäre es prinzipiell möglich, den Rotorkörper massiv auszuführen. Doch würde dies einen hohen Fertigungsaufwand insbesondere bei der Herstellung der Wicklungsnuten mit sich bringen. Eine solche Technologie ist demgemäss nur in Sonderfällen anwendbar.

## KURZE DARSTELLUNG DER ERFINDUNG

Der Erfindung liegt die Aufgabe zugrunde, einen Rotor einer Asynchronmaschine anzugeben, welcher allen Betriebsbeanspruchungen standhält, sich durch wirtschaftliche Herstellung auszeichnet und einen Rotorblechkörper aufweist, der einem aus herkömmlichen (dünnen) Elektroblechen aufgebauten Blechkörper hinsichtlich mechanischer Beanspruchbarkeit überlegen und in elektrischer und magnetischer Hinsicht gleichwertig ist.

Diese Aufgabe wird erfindungsgemäss dadurch gelöst, dass der Rotorkörper aus einzelnen Blechscheiben aufgebaut ist, welche eine selbsttragende Einheit bilden, und dass der Rotorkörper zwischen den Wellenenden eingespannt ist.

Ein derart aufgebauter Blechkörper weist eine wesentlich höhere Festigkeit auf. Es treten keinerlei Spannungsüberhöhungen am Wellensitz infolge Schrumpf und/oder Keilnuten auf. Desgleichen werden bei Blechkörpern mit geschlossenen Nuten hohe Spannungen im Bereich der Rotorzähne vermieden. Der erfindungsgemässe Rotor erlaubt ferner das Aufziehen einer Kappe über den Wickelkopf, womit auch an dieser exponierten Stelle höhere Fliehkräfte und Umfangsgeschwindigkeiten realisiert werden können.

Eine elektrische Isolation zwischen den einzelnen Blechscheiben ist vorteilhaft, aber grundsätzlich nicht notwendig. Im Bedarfsfall können jedoch zwischen benachbarten Blechscheiben Isolierschichten, z.B. Lackschichten oder eine Polyimid-Folie, vorgesehen sein.

In Anwendung der erfindungsgemässen Lehre sind verschiedenartige Ausgestaltungen möglich. Neben der Verspannung des Rotorkörpers über einen Zentralbolzen kann die Verspannung auch mittels Bolzen erfolgen, die auf einem Teilkreis ausserhalb der Rotorachse angeordnet sind. Eine weitere Variante sieht vor, die einzelnen Blechscheiben untereinander zu verschweissen.

Ausführungsbeispiele der Erfindung sowie weitere damit erzielbare Vorteile werden nachfolgend anhand der Zeichnung näher erläutert.

## KURZE BESCHREIBUNG DER ZEICHNUNG

In der Zeichnung sind Ausführungsbeispiele der Erfindung schematisch dargestellt, und zwar zeigt:

Fig.1    einen Längschnitt durch einen erfindungsgemässen Rotor mit einem durch aussermittige Bolzen zusammengespanntem selbsttragenden Blechkörper und beidseits angeordneten Wellenstummeln;

Fig.2    einen Querschnitt durch den Rotorblechkörper nach Fig.1 längs deren Linie AA mit zusätzlich am Aussenumfang des Rotorkörpers verschweissten Blechscheiben;

Fig.3    eine Draufsicht auf den Rotor gemäss Fig.2, aus welcher die Art der Verschweissung der Blechscheiben ersichtlich ist;

Fig.4 eine Variante zu Fig.3 mit jeweils drei verschweissten Blechscheiben;

Fig.5 eine Abwandlung des Rotors nach Fig.1 mit einem Zentralbolzen zum Zusammenspannen des Rotorkörpers;

Fig.6 einen Querschnitt durch den Rotorkörper nach Fig.5 längs deren Linie BB;

Fig.7 einen Querschnitt durch die rechte Endpartie des Rotors gemäss Fig.5, aus welcher das Verschweissen der Einzelbleche innerhalb des Rotorblechkörpers hervorgeht;

Fig.8 einen Querschnitt durch den Blechkörper gemäss Fig.7 längs deren Linie CC;

Fig.9 eine Abwandlung eines Rotors nach Fig.1, wobei die Wellenstummel an die untereinander verschweissten Blechscheiben angeschweisst sind.

## WEGE ZUR AUSFÜHRUNG DER ERFINDUNG

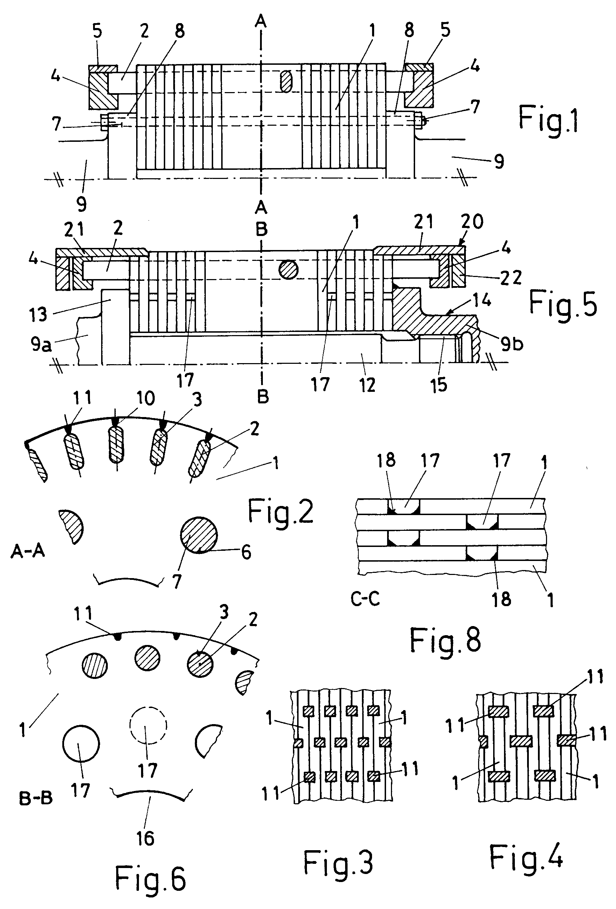

Ein Rotor einer Asynchronmaschine gemäss Fig.1 umfasst einen aus vergleichsweise dicken Blechscheiben 1 zusammengesetzten Rotorkörper, eine Käfigwicklung, bestehend aus axial verlaufenden Leiterstäben 2 mit im Beispielsfalle ovalem Querschnitt (s.Fig.2), welche in axialverlaufenden Durchgangsbohrungen 3 nahe dem Aussenumfang des Rotorkörpers liegen. Die den Rotorkörper überragenden Enden der Leiterstäbe 2 sind mit Kurzschlussringen 4 elektrisch und mechanisch fest verbunden. Aufgeschrumpfte Ringe 5 umfassen sowohl die Kurzschlussringe 4 als auch die Enden der Leiterstäbe 2 und erhöhen die Belastbarkeit des Wickelkopfes gegenüber Fliehkraftbeanspruchungen. Neben den Durchgangsbohrungen 3 weist der Rotorkörper eine Anzahl gleichmässig über den Umfang verteilte Bohrungen 6 auf, durch welche Bolzen 7 geführt sind. In Verbindung mit Flanschen 8 an zwei Wellenstummeln 9 dienen diese Bolzen 7 zum Zusammenspannen der Blechscheiben 1 des Rotorkörpers.

Die Blechscheiben 1 bestehen aus gewalztem Stahlblech und sind gegenüber den im Elektromaschinenbau sonst verwendeten sogenannten Dynamoblechen (mit einer typischen Blechstärke von 0,5 bis 1 mm) bedeutend dicker. Ihre Dicke beträgt je nach Maschinengrösse zwischen 5 mm und mehr. Die Obergrenze für die Dicke der Blechscheiben - sie liegt bei etwa 500 mm - ist im wesentlichen durch die rationelle Bearbeitbarkeit, wie Stanzen und/oder Brennen bzw. Bohren von Löchern und dergl., bestimmt. Ein derart aufgebauter Rotorkörper bildet eine selbsttragende Baueinheit, die zwischen den beiden Wellenstummeln 9 eingespannt ist.

Optional zur Verspannung mittels Bolzen 7 kann es insbesondere bei Rotoren mit grösserem Aussendurchmesser notwendig sein, die Blechscheiben 1 zusätzlich am Aussenumfang untereinander mit Schweissraupen 11 zu verschweissen.

Um dabei keine direkten stromleitenden Pfade in Axialrichtung der Maschine zu schaffen, empfiehlt es sich, mit einer Schweissraupe nur jeweils zwei oder drei Bleche 1 miteinander zu verbinden und die nächste Schweissraupe gegenüber der ersten in Umfangsrichtung versetzt anzubringen, wie es in der Draufsicht der Fig.3 bzw. Fig.4 verdeutlicht ist.

Die in Fig.5 dargestellte Abwandlung der Erfindung weist gleichfalls einen aus "dicken" Blechscheiben 1 aufgebauten Rotorkörper auf. Im Gegensatz zur Ausführungsform nach Fig.1 wird hier ein massiver Zentralbolzen 12 zur Verspannung des Rotorkörpers eingesetzt. Dieser Zentralbolzen 12 weist an einem Ende einen Bund 13 auf, der sich zum freien Bolzenende hin wieder verjüngt und einen Wellenstummel 9a bildet. Der Zentralbolzen 12 ist an seinem anderen Ende in einen flanschartigen Körper 14 mit Innengewinde 15 geschraubt. Dieser Körper 15 ist an seinem freien Ende als Wellenstummel 9b ausgebildet. Der Durchmesser der Wellenbohrung 16 der Blechscheiben 1 ist dabei grösser als der Aussendurchmesser des Zentralbolzens 12. Die Blechscheiben 1 sind demgemäss allseitig vom Zentralbolzen 12 beabstandet und stützen sich demgemäss nicht auf dem Zentralbolzen 12 ab.

Eine Verbesserung der Festigkeit des Rotorkörpers lässt sich erzielen, wenn die Blechscheiben 1 im Abschnitt zwischen Innen- und Aussendurchmesser untereinander verbunden, vorzugsweise untereinander verschweisst sind.

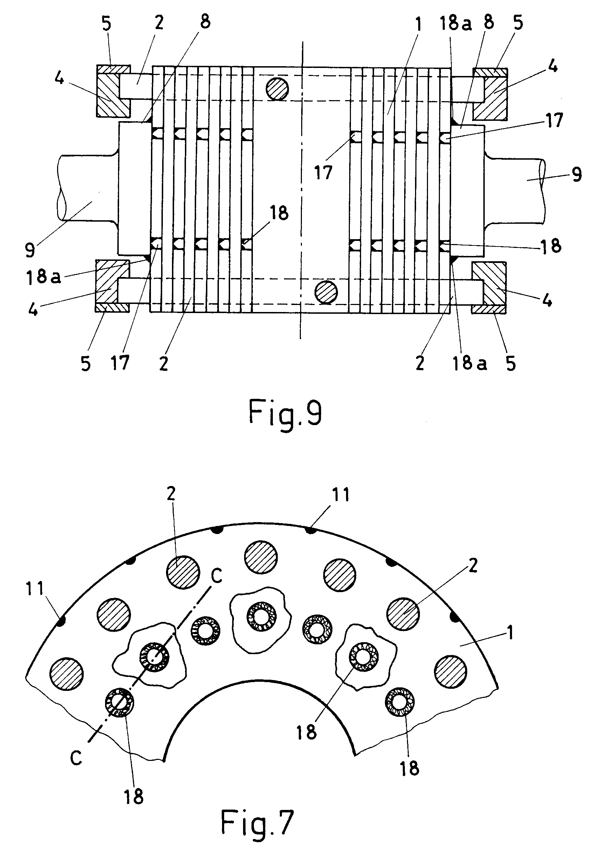

Gemäss Fig.7 und 8 sind in den Blechscheiben 1 Durchbrüche 17 vorgesehen, wobei die Durchbrüche 17 zweier unmittelbar benachbarter Blechscheiben 1 in Umfangsrichtung gegeneinander versetzt sind, so dass jeweils die Durchbrüche 17 in jeder zweiten Blechscheibe 1 miteinander fluchten (Fig.8). Diese Durchbrüche 17 liegen auf einem Teilkreis kleineren Durchmessers als der Teilkreis, auf dem die Nuten 3 liegen. An diesen Durchbrüchen können dann sukzessive die Einzelbleche 1 miteinander verschweisst werden (Schweissnähte 18 in Fig.7 und 8). Diese Verschweissung beeinträchtigt das magnetische Verhalten des Rotorkörpers nur unwesentlich, weil die im Betrieb auftretenden Felder bis auf das Grundfeld nicht oder nur in geringem Masse bis in diese Tiefe eindringen. Auch die mögliche lokale Zerstörung einer eingangs erwähnten Isolationsschicht zwischen benachbarten Blechscheiben durch den Schweissvorgang hat keine schädlichen Nebenwirkungen.

Wie aus dem Schnitt gemäss Fig.6 hervorgeht, besteht auch bei dieser Ausführungsform die Möglichkeit, die Blechscheiben 1 am Aussenumfang miteinander zu verschweissen. Dies erfolgt vorzugsweise in Gruppen zu zwei oder drei Blechen nach dem in Fig.3 und 4 dargestellten Schema.

Bei einem Rotor nach Fig.5 besteht analog zur Ausführungsform nach Fig.1 ebenfalls die Möglichkeit, den Wickelkopf mit einem aufgeschrumpften Ring gegen Fliehkrafteinwirkung zu sichern. Anstelle eines solchen Ringes kann aber auch eine komplette Rotorkappe 20, bestehend aus einem Kappenring 21 und einer Ringscheibe 22, verwendet werden, die zur Rotormitte hin auf dem Rotorblechkörper aufliegt und nach aussen den Kurzschlussring 4 überragt. Eine derartige Rotorkappe kann selbstverständlich auch bei einem Rotor gemäss Fig.1 und Fig.9 appliziert werden.

Fig.9 schliesslich vermittelt eine Ausführungsform eines praktisch ausschliesslich in Schweisstechnik hergestellten Rotorkörpers. Die Blechscheiben 1 weisen im Gegensatz zur den Ausführungen nach Fig.1 und 5 keine zentrale Bohrung auf. Die Verbindung der einzelnen Blechscheiben 1 untereinander erfolgt analog Fig.6 durch Schweissraupen 18 in den Durchbrüchen 17. Die beiden wellenstummel 9 sind an ihren Flanschen 8 mit der ersten bzw. letzten Blechscheibe verschweisst (Schweissraupen 18a). Optional können auch hier die Blechscheiben gruppenweise am Aussenumfang verschweisst werden, wie es in Fig.3 oder 4 veranschaulicht ist.

## Patentansprüche

1. Rotor einer Asynchronmaschine mit einem mehrteiligen Rotorkörper, der in Axialrichtung zusammengehalten und kraft- oder formschlüssig mit einer Welle verbunden ist und bei welchem Leiterstäbe (2) in Durchgangsbohrungen (3) im Rotorkörper liegen, die ausserhalb des Rotorkörpers mit je einem Kurzschlussring (4) elektrisch und mechanisch untereinander verbunden sind, dadurch gekennzeichnet, dass der Rotorkörper aus einzelnen Blechscheiben (1) aufgebaut ist, welche eine selbsttragende Einheit bilden, und dass der Rotorkörper zwischen den Wellenenden (9;9a,9b) eingespannt ist.

2. Rotor nach Anspruch 1, dadurch gekennzeichnet, dass der Rotorkörper mittels Bolzen (7), die auf einem Teilkreis ausserhalb der Rotorachse liegen, zwischen zwei mit Flanschen (8) versehenen Wellenstummeln (9) eingespannt ist (Fig.1).

3. Rotor nach Anspruch 1, dadurch gekennzeichnet, dass der Rotorkörper mittels eines Zentralbolzens (12) zusammengespannt ist, wobei das freie Bolzenende mit einem Bund (13) versehen ist und sich nach aussen hin in einen ersten Wellenstummel (9a) fortsetzt, während das andere Bolzenende in einen flanschartigen Körper (14) eingeschraubt ist, der am freien Ende mit dem anderen Wellenstummel (9b) vorzugsweise einstückig verbunden ist (Fig.5).

4. Rotor nach Anspruch 1, dadurch gekennzeichnet, dass die Blechscheiben (1) unter sich und die stirnseitigen Blechscheiben mit je einem Wellenstummel (9) verschweisst sind (Fig.9).

5. Rotor nach einem der Ansprüche 1 bis 4, dadurch gekennzeichnet, dass die Blechscheiben (1) zusätzlich an ihrem Aussenumfang miteinander verschweisst sind.

6. Rotor nach Anspruch 5, dadurch gekennzeichnet, dass die Verschweissung sich lokal nur über wenige Blechscheiben (1) erstreckt und die sich daran anschliessende Verschweissung gegenüber der vorangegangenen in Umfangsrichtung versetzt ist. (Fig.3;Fig.4).

7. Rotor nach Anspruch 3 oder 4, dadurch gekennzeichnet, dass die Blechscheiben (1) mit Durchbrüchen (17) versehen sind, an bzw. in denen zwei benachbarte Blechscheiben (1) miteinander verschweisst sind.

8. Rotor nach Anspruch 6, dadurch gekennzeichnet, dass die Durchbrüche in zwei unmittelbar benachbarten Blechscheiben (1) in Umfangsrichtung gegeneinander versetzt sind, und die Verschweissung jeweils zwischen einem Durchbruch (17) und der sich unmittelbar daran anschliessenden Blechscheibe erfolgt (Fig.7 und Fig.8).

Fig.1

Fig.5

Fig.2

A-A

Fig.8

C-C

Fig.6

B-B

Fig.3

Fig.4

Fig.9

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-603 312 (SIEMENS-SCHUCKERT) <br> * Seite 1, Zeile 46 - Seite 2, Zeile 59; <br> Abbildungen 3,5 * | 1,2 | H02K1/28 <br> H02K17/16 <br> H02K1/26 |
| Y | | 3-6 | |
| Y | DE-C-558 384 (BROWN BOVERI) <br> * Seite 1, Zeile 32 - Seite 2, Zeile 28; <br> Abbildungen 1,2 * | 3 | |
| Y | GB-A-364 027 (BROWN BOVERI) <br> * Seite 1, Zeile 61 - Zeile 91; Abbildung 1 * | 4,5 | |
| Y | DE-B-1 218 599 (WAASNER) <br> * Spalte 3, Zeile 5 - Spalte 4, Zeile 31; <br> Abbildungen 1-3 * | 6 | |
| A | | 8 | |
| X | US-A-2 419 863 (WARE) <br> * Spalte 1, Zeile 37 - Spalte 2, Zeile 36; <br> Abbildungen 1-3 * | 1,2 | |
| Y | | 4,5 | **RECHERCHIERTE SACHGEBIETE (Int. Cl.5)** |
| Y | DE-A-2 727 490 (ROBERT BOSCH) <br> * Seite 6, Zeile 7 - Seite 8, Zeile 18; <br> Abbildungen 1,4 * | 4,5 | H02K |
| A | | 6 | |
| X | DE-B-1 162 465 (LICENTIA) <br> * Spalte 3, Zeile 30 - Zeile 55 * <br> * Spalte 4, Zeile 12 - Zeile 28; Abbildungen 2-4,9 * | 1-3 | |
| X | DE-A-2 238 755 (LICENTIA) <br> * Seite 3 - Seite 4; Abbildungen 1-3 * | 1,4 | |
| A | | 7 | |

Der vorliegende Recherchenbericht wurde für alle Patentansprüche erstellt

| Recherchenort | Abschlußdatum der Recherche | Prüfer |
|---|---|---|
| DEN HAAG | 08 NOVEMBER 1991 | TIO K.H. |